# EUROPEAN PATENT APPLICATION

(11) **EP 4 510 437 A1**
(43) Date of publication of application: **19.02.2025**
(21) Application number: 22937576.1
(22) Date of filing: 22.11.2022
(51) Int. Cl.: H02M 7/00, H02M 3/00, H02M 5/40, H01F 27/02, H01F 27/08, H01F 30/06, H01F 38/04

(54) **SUBMODULE FOR SINGLE PACKAGING TYPE SEMICONDUCTOR TRANSFORMER WITH REDUCED PARTIAL DISCHARGE AND EXCELLENT INSULATION PERFORMANCE**

(30) Priority: 13.04.2022 KR 20220045976
(71) Applicant: Hyosung Heavy Industries Corporation, Seoul 04144 (KR)
(72) Inventor: KIM, Sung Joo, Goyang-si, Gyeonggi-do 10218 (KR); JEONG, Byung Hwan, Gwacheon-si, Gyeonggi-do 13835 (KR)
(74) Representative: Viering, Jentschura & Partner mbB Patent- und Rechtsanwälte
(86) International application number: PCT/KR2022/018529
(87) International publication number: WO 2023/200063

(57) **Abstract**

The present invention relates to a submodule for a semiconductor transformer in single packaging with reduced partial discharge quantity and excellent insulation performance that is capable of applying an equipotential structure for each stage of the submodule for the semiconductor transformer to further improve insulation performance by reducing partial discharge quantity in the semiconductor transformer while improving insulation performance by securing separation distance between a high voltage unit and a low voltage unit in the semiconductor transformer.

The submodule for semiconductor transformer in single packaging with reduced partial discharge quantity and excellent insulation performance in the present invention comprises: a high voltage unit for converting high-voltage low-frequency AC power into high-frequency AC power; a transforming unit for converting the high-voltage AC power into low-voltage AC power; and a low voltage unit for converting the low-voltage AC power into low-voltage DC power.

## Description

### FIELD OF THE INVENTION

The present invention relates to a submodule for a semiconductor transformer, and more particularly, to the submodule for the semiconductor transformer in single packaging with reduced partial discharge quantity and excellent insulation performance to improve insulation performance between a high voltage unit and a low voltage unit in the semiconductor transformer.

### BACKGROUND OF THE INVENTION

In general, to charge electric vehicle batteries, the voltage of 60Hz/22.9kV is lowered by using a transformer, and converted to a certain amount of DC voltage by using AC/DC converters. The transformer and the AC/DC converters are components that take up a lot of load, and are required to become lighter.

Particularly, since a main transformer works at 60Hz low frequency, and such low-frequency transformer is heavy and bulky, it has relatively low power density.

To improve this, a lot of researches have been carried out to reduce the weight of transformers and AC/DC converters that work at commercial frequencies, of which one is to reduce the volume and weight of the transformers by using semiconductor devices and increasing the operating frequencies of the transformers from 60Hz to much higher frequencies such as several kHz to tens of kHz.

As such, a device that converts input low-frequency and high-voltage electrical power into high-frequency power by using a semiconductor device and then converts into DC voltage through a medium frequency transformer (MFT) is called a solid-state transformer (SST) or intelligent transformer, and compared to the existing low-frequency transformers, its importance is emerging due to its advantages such as reduced system size, power quality compensation, unit power factors, etc.

Meanwhile, if high voltage of 22.9kV is applied, the existing low-frequency transformers may cause a problem of insulation problem between a primary winding and a secondary winding. For the purpose of the insulation between the primary winding and the secondary winding, the two are separated, and an insulation structure is placed therebetween, with insulating oil filled. Therefore, commercial frequency transformers have disadvantages of increased weight and volume.

The insulation problem occurs even when the existing commercial frequency transformers are replaced with semiconductor transformers. In other words, the MFT used for semiconductor transformers uses the existing transformer structure as it is**.** While the same problem exists, efforts to solving an insulation problem between components of a high voltage unit and those of a low voltage unit have been continued.

For an example, Korean Patent Laid-Open Publication No. 10-2020-0048376 proposed a submodule for a modular multilevel converter that comprises: a first housing in which a capacitor is installed, and a second housing in which the other components including an IGBT switch are installed; wherein the attachable or detachable first housing is installed on a side of the second housing in a hot-swap way to make maintenance, including replacement of a submodule capacitor, easier, and at the same time, wherein enough insulation strength between the submodule capacitor and the submodule controller is secured.

However, even in this case, there is a disadvantage that insulation performance is reduced due to partial discharge quantity occurring in such semiconductor transformer.

### DETAILED EXPLANATION OF THE INVENTION

### OBJECTS OF THE INVENTION

An object of the present invention is to provide a submodule for a semiconductor transformer in single packaging with reduced partial discharge quantity and excellent insulation performance to improve insulation performance by securing separation distance between a high voltage unit and a low voltage unit in the semiconductor transformer.

The other object of the present invention is to provide a submodule for a semiconductor transformer in single packaging with excellent insulation performance by applying an equipotential structure for each stage of the submodule for the semiconductor transformer so that partial discharge quantity in the semiconductor transformer is reduced, and overall insulation performance is further improved.

### MEANS OF SOLVING THE PROBLEM

A submodule for a semiconductor transformer in single packaging with reduced partial discharge quantity and excellent insulation performance in accordance with the present invention may comprise: a high voltage unit for converting high-voltage low-frequency AC power into high-frequency AC power; a transforming unit for converting the high-voltage AC power into low-voltage AC power; and a low voltage unit for converting the low-voltage AC power into low-voltage DC power.

Herein, the transforming unit may have a partition wall for the high voltage unit and a partition wall for the low voltage unit removed.

In addition, the transforming unit may be placed between the high voltage unit and the low voltage unit by changing its size depending on voltage used in the high voltage unit and the low voltage unit, or depending on voltage difference between the high voltage unit and the low voltage unit.

Herein, the transforming unit may be placed between the high voltage unit and the low voltage unit by changing its size in a structure easy to change the size depending on physical constraints such as size of a transformer used for the transforming unit.

Furthermore, the transforming unit may be encompassed by an enclosure made of epoxy glass.

Herein, a side cover of the transforming unit may have vent holes to dissipate heat generated from the transformer outside.

Moreover, a side cover of the transforming unit near a side of the high voltage unit does not have vent holes.

Herein, the high voltage unit may make a conductor in the high voltage unit electrically equipotential to a capacitor neutral point.

In addition, the transforming unit may make core of a transformer in the transforming unit electrically equipotential to a ground.

Herein, the low voltage unit may make a conductor in the low-voltage unit electrically equipotential to a ground.

### EFFECTS OF THE INVENTION

A submodule for a semiconductor transformer in single packaging with reduced partial discharge quantity and excellent insulation performance in accordance with the present invention has an advantage of increasing insulation performance by securing separation distance between a high voltage unit and a low voltage unit in the semiconductor transformer.

Besides, the submodule for the semiconductor transformer in single packaging with reduced partial discharge quantity and excellent insulation performance in accordance with the present invention is capable of applying an equipotential structure for each stage of the submodule for the semiconductor transformer to further improve insulation performance by reducing partial discharge quantity in the semiconductor transformer.

### BRIEF DESCRIPTION OF THE DRAWINGS

Fig. 1 is a drawing of a submodule for a semiconductor transformer in single packaging with reduced partial discharge quantity and excellent insulation performance in accordance with an example embodiment of the present invention.
Fig. 2 is a drawing specifically illustrating a configuration of a high voltage unit, a transforming unit, and a low voltage unit in Fig. 1.

### DETAILED DESCRIPTION OF THE PREFERRED EMBODIMENTS

Detailed examples of embodiments to implement the present invention are explained by referring to attached drawings.

The present invention may have various changes, and several examples of embodiments, and therefore, it is intended that specific example embodiments are exemplified in drawings, and detailed explanations are given more specifically. This is not intended to limit the present invention to specific forms of embodiments, and it may be understood that this includes all changes, equivalents, and substitutes in the spirit and technical scope of the present invention.

Below is an explanation of a submodule for a semiconductor transformer in single packaging with reduced partial discharge quantity and excellent insulation performance in accordance with the present invention by referring to the attached drawings.

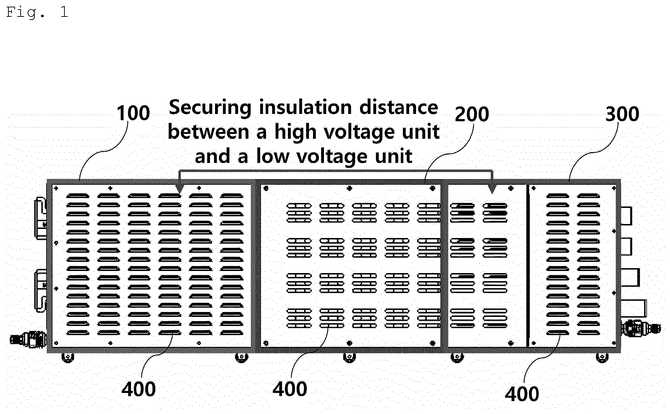

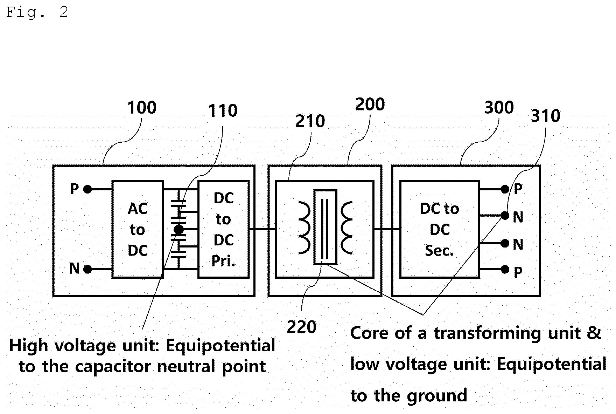

Fig. 1 is a drawing of a submodule for a semiconductor transformer in single packaging with reduced partial discharge quantity and excellent insulation performance in accordance with an example embodiment of the present invention, and Fig. 2 is a drawing specifically illustrating a configuration of a high voltage unit, a transforming unit, and a low voltage unit in Fig. 1.

By referring to Figs 1 and 2, the submodule for semiconductor transformer in single packaging with reduced partial discharge quantity and excellent insulation performance in accordance with an example embodiment of the present invention is explained below.

First, by referring to Fig. 1, the submodule for the semiconductor transformer in single packaging with reduced partial discharge quantity and excellent insulation performance in accordance with an example embodiment of the present invention comprises: a high voltage unit 100 for converting high-voltage low-frequency AC power into high-frequency AC power; a transforming unit (medium frequency transformer or MFT) 200 for converting the high-voltage AC power into low-voltage AC power; and a low voltage unit 300 for converting the low-voltage AC power into low-voltage DC power.

In general, a semiconductor transformer which inputs AC 22.9kV grid line voltage requires design of a submodule structure considering equipment/electrical insulation to secure high insulation performance.

In center of the transforming unit 200, the submodule for the semiconductor transformer in accordance with the present invention is configured to have the high voltage unit 100 and the low voltage unit 300 in an insulated form, and respective enclosures for the high voltage unit 100, the transforming unit 200, and the low voltage unit 300 are in a packaging structure where they are connected in series.

Herein, the transforming unit 200 is placed between the high voltage unit 100 and the low voltage unit 300 by changing its size depending on voltage used in the high voltage unit 100 and the low voltage unit 300, or depending on voltage difference between the high voltage unit 100 and the low voltage unit 300. Besides, the transforming unit 200 is placed between the high voltage unit 100 and the low voltage unit 300 by changing its size in a structure easy to change the size depending on physical constraints such as size of a transformer used for the transforming unit.

In other words, the present invention has an advantage of being capable of easily widening separation distance between the high voltage unit 100 and the low voltage unit 300 by adjusting the size of the transforming unit 200, and improving insulation performance by securing the separation distance and creepage distance in the air through this.

At the time, if voltage used at the high voltage unit 100 is relatively larger than voltage used at the low voltage unit 300 depending on voltage used at the high voltage unit 100 and the low voltage unit 300, the size of the transforming unit 200 may be changed to be large, and if the size of the transformer is smaller, separation distance of the high voltage unit 100 and the transforming unit 200 may be changed to be smaller by making the transforming unit 200 get physically smaller.

In addition, enclosures of the high voltage unit 100, the transforming unit 200, and low voltage unit 300 in accordance with the present invention may have vent holes 400 to dissipate internally generated heat to outside.

At the time, even side covers of the transforming unit 200 have vent holes, but in accordance with the example embodiment, the side cover of the transforming unit 200 near a side of the high voltage unit 100 does not have vent holes. As such, as the side cover of the transforming unit 200 does not have vent holes 400 near the side of the high voltage unit 100, this brings the effect of further improving insulation performance between the high voltage unit 100 and the low voltage unit 300.

Like this, the submodule for the semiconductor transformer in single packaging with reduced partial discharge quantity and excellent insulation performance in accordance with the present invention may change the separation distance between the high voltage unit 100 and the low voltage unit 300 easily depending on voltage used at the high voltage unit 100 and the low voltage unit 300, and the size of the transformer. Therefore, it has an advantage of maintaining the insulation performance between the high voltage unit 100 and the low voltage unit 300, and at the same time, being configured at an optimal size.

Fig. 2 is a drawing specifically illustrating a configuration of the high voltage unit 100, the transforming unit 200, and the low voltage unit 300 in Fig. 1.

In Fig. 2, the transforming unit 200 in the present invention has a partition wall of the high voltage unit 100 and a partition wall of the low voltage unit 300 removed.

The present invention has the effect of improving insulation performance while reducing overall weight and size of the submodule by removing the partition wall between the transforming unit 200 and the high voltage unit 100 and the partition wall between the transforming unit 200 and the low voltage unit 300.

By removing the partition walls, and rearranging components, it is possible to reduce the distance by around 20 mm between the high voltage unit 100 and the transforming unit 200, and also to reduce the distance by around 20 mm between the transforming unit 200 and the low voltage unit 300 to minimize the size of the submodule.

At the same time, as a result of a test, while insulation performance was 200 [pC] or less at 25kV before the partitions were removed, the insulation performance was same at 48kV after the partition walls were removed. The present invention brings the effect of improving insulation performance by removing the partitions.

In addition, the transforming unit 200 in the present invention is encompassed by an enclosure made of epoxy glass as a material with excellent insulation and flame-retardant performance. Through this, the present invention improves insulation performance while securing separation distance and creepage distance in the air between the high voltage unit 100 and the low voltage unit 300.

Meanwhile, the submodule for semiconductor transformer in single packaging with reduced partial discharge quantity and excellent insulation performance in accordance with the present invention improves insulation performance by decreasing partial discharge quantity with an equipotential structure for each stage of the submodule for the semiconductor transformer.

In other words, the submodule for the semiconductor transformer in single packaging with reduced partial discharge quantity and excellent insulation performance in accordance with the present invention makes a conductor in the high voltage unit 100 electrically equipotential to a neutral point 110 of a capacitor in the high voltage unit 100.

Regarding the transforming unit 200 and the low voltage unit 300, core 220 of a transformer 210 in the transforming unit 200 and a conductor in the low voltage unit 300 are made to be electrically equipotential to a ground 310. In accordance with the example embodiment, it is made to be equipotential to a ground of an energy storage system, not illustrated, connected with the submodule.

Herein, the conductor means a conductive metal component, which may include bolts, nuts, rivets, and a variety of cases, etc. made of metals.

In other words, for example, if the conductor in the high voltage unit 100 is not made to be equipotential to ends of multiple capacitors equipped in the high voltage unit 100, a voltage of 4.2kV is applied to a power module applied to the high voltage unit 100, but just like the present invention, if the conductor in the high voltage unit 100 is made equipotential to a capacitor neutral point 110 as a center of multiple capacitors, only voltage of 2.1kV, which is half of 4.2kV, is applied to the power module applied to the high voltage unit 100, thus providing a margin for insulation voltage of the power module.

Accordingly, through this, the present invention may further improve overall insulation performance by reducing partial discharge quantity in the semiconductor transformer while securing margin for withstanding voltage of the power module configured in the high voltage unit 100.

As shown above, by applying the equipotential structure for each stage of the submodule for the semiconductor transformer while improving overall insulation performance by securing separation distance between the high voltage unit and the low voltage unit, the submodule for semiconductor transformer in single packaging with reduced partial discharge quantity and excellent insulation performance in accordance with the present invention may reduce partial discharge quantity to further improve overall insulation performance.

The above-mentioned example embodiments are included in one or more examples of embodiments. Of course, it may be recognized that they cannot describe all possible combinations of components or methods for the purpose of explaining aforementioned example embodiments but they may be added or replaced with a lot of additional combinations of various example embodiments by those skilled in the art. Accordingly, the explained example embodiments include all alternatives, modifications, and alternations within the intention and scope of what is claimed as attached below.

### Industrial Availability

The present invention relates to a submodule for a semiconductor transformer, which is available in a field of semiconductor transformer.

## Claims

1. A submodule for a semiconductor transformer in single packaging with reduced partial discharge quantity and excellent insulation performance, comprising:
a high voltage unit for converting high-voltage low-frequency AC power into high-frequency AC power;
a transforming unit for converting the high-voltage AC power into low-voltage AC power; and
a low voltage unit for converting the low-voltage AC power into low-voltage DC power.

2. The submodule of Claim 1, wherein the transforming unit has a partition wall for the high voltage unit and a partition wall for the low voltage unit removed.

3. The submodule of Claim 1, wherein the transforming unit is placed between the high voltage unit and the low voltage unit by changing its size depending on voltage used in the high voltage unit and the low voltage unit, or depending on voltage difference between the high voltage unit and the low voltage unit.

4. The submodule of Claim 1, wherein the transforming unit is placed between the high voltage unit and the low voltage unit by changing its size in a structure easy to change the size depending on physical constraints such as size of a transformer used for the transforming unit.

5. The submodule of Claim 1, wherein the transforming unit is encompassed by an enclosure made of epoxy glass.

6. The submodule of Claim 5, wherein a side cover of the transforming unit has vent holes.

7. The submodule of Claim 6, wherein a side cover of the transforming unit near a side of the high voltage unit does not have vent holes.

8. The submodule of Claim 1, wherein the high voltage unit makes a conductor in the high voltage unit electrically equipotential to a capacitor neutral point.

9. The submodule of Claim 1, wherein the transforming unit makes core of a transformer in the transforming unit electrically equipotential to a ground.

10. The submodule of Claim 1, wherein the low voltage unit makes a conductor in the low voltage unit electrically equipotential to a ground.
